# EUROPÄISCHE PATENTSCHRIFT

(11) **EP 1 317 352 B1**
(45) Veröffentlichungstag und Bekanntmachung des Hinweises auf die Patenterteilung: **10.03.2004**
(21) Anmeldenummer: 01960050.1
(22) Anmeldetag: 05.09.2001
(51) Int. Cl.: B42D 15/10, G06K 1/12, G06K 19/14, G06K 19/16, G07F 7/08

(54) **MEHRSCHICHTIGER AUFZEICHNUNGSTRÄGER**
MULTILAYERED RECORDING MEDIUM
SUPPORT DE DONNEES A PLUSIEURS COUCHES

(30) Priorität: 13.09.2000 CH 177800
(43) Veröffentlichungstag der Anmeldung: 11.06.2003
(73) Patentinhaber: Trüb AG, CH-5001 Aarau (CH)
(72) Erfinder: POT, Stephane, CH-5722 Gränichen (CH); HOFSTETTER, Stephan, D., CH-5015 Niedererlinsbach (CH); SIEGFRIED, Christof, CH-5035 Unterentfelden (CH); CHRISTEN, Paul, CH-5000 Aarau (CH)
(74) Vertreter: Groner, Manfred
(86) Internationale Anmeldenummer: PCT/CH2001/000536
(87) Internationale Veröffentlichungsnummer: WO 2002/022376

(56) Entgegenhaltungen:
- EP-A- 0 328 086
- WO-A-01/02190
- DE-A- 2 501 604
- DE-A- 4 134 539
- US-A- 5 387 013
- US-A- 6 113 149
- US-B1- 6 214 153
- PATENT ABSTRACTS OF JAPAN vol. 014, no. 514 (M-1046), 13. November 1990 (1990-11-13) & JP 02 212195 A (DAINIPPON PRINTING CO LTD), 23. August 1990 (1990-08-23)

## Beschreibung

Die Erfindung betrifft einen mehrschichtigen Auf zeichnungsträger nach dem Oberbegriff des Anspruchs 1. Solche Sicherheitselemente sind beispielsweise Prägungen, Hologramme oder Sicherheitsdruckbilder. Da sich die Fälschungsmethoden laufend verbessern, müssen ständig neue Sicherheitsmerkmale bereitgestellt werden, welche das Fälschen erschweren.

Die gattungsbildende US-A-5,387,013 offenbart einen mehrschichtigen Aufzeichnungsträger mit einem Sicherheitsdruckbild, das ein Hologramm und ein "heat transfer image" aufweist, die auf unterschiedliche Schichten, jedoch seitlich zueinander versetzt aufgebracht sind.

Die DE-A-41 34 539 offenbart eine Bankkarte, bei der Bildinformationen mit einem Laserschreiber Bildinformationen in einen Farb- und einen Graustufenanteil zerlegt werden.

Die DE-A-25 01 604 offenbart eine Ausweiskarte, bei der zur Verbesserung der Fälschungssicherheit ein Hologramm vorgesehen ist.

Weitere Aufzeichnungsträger mit Sicherheitsmerkmalen zeigen die WO 01/02190, die US-A-6,113,149, die EP-A-0 328 086 und die US-B-6,214,153.

Bei einigen Banknoten und auch beim deutschen Auto-Fahrausweis sind als Sicherheitselement zwei sich ergänzende Teile eines Bildes auf die Vorderseite und die Rückseite aufgedruckt. Werden nun diese Banknoten bzw. der Fahrzeugausweis gegen ein Licht gehalten, so ergänzen sich die Bildteile der Vorder- und Rückseite zu einem ganzen Bild. Damit das ganze Bild sichtbar ist, ist es erforderlich, dass die Banknoten bzw. der Fahrausweis durchscheinend sind und somit eine vergleichsweise geringe Opazität aufweisen. Die sich ergänzenden Teile sind vergleichsweise grob und die mit diesen erreichbare Sicherheit ist für Ausweis- und Kreditkarten nicht ausreichend. Zudem haben insbesondere durchscheinende Karten den Nachteil, dass Bilder der einen Kartenseite diejenige der anderen Kartenseite stören.

Der Erfindung liegt die Aufgabe zugrunde, einen Aufzeichnungsträger der genannten Art zu schaffen, der eine höhere Sicherheit gegen Fälschung aufweist und der trotzdem kostengünstig herstellbar ist. Die Aufgabe ist gemäss Anspruch 1 gelöst.

Der erfindungsgemässe Aufzeichnungsträger kann mit opaken Folien und damit nicht durchscheinend hergestellt werden. Störungen von Bildern von der einen Kartenseite zur anderen können damit vermieden werden. Das Sicherheitsdruckbild lässt sich als sehr feines Bild oder Zeichnung herstellen. Dadurch lassen sich beispielsweise Sicheeheits-Guillochen als Darstellungselemente verwenden, womit die Sicherheit zusätzlich erhöht werden kann. Da die zweiten Teile des Sicherheitsdruckbildes im Inneren des Trägerkörpers gedruckt sind, ist ein solches Sicherheitsdruckbild sehr schwer zu fälschen.

Gemäss einer Weiterbildung der Erfindung ist das Sicherheitsdruckbild in alternierende Teile zerlegt und diese separierten Teile werden so gedruckt, dass zwischen den ersten Teilen und den zweiten Teilen ein Abstand in der Kartentiefe entsteht. Dieser Abstand beträgt gemäss einer Weiterbildung der Erfindung wenigstens 100 µm, vorzugsweise mehr als 150 µm. Durch diese Abstände und die genannte Bildaufteilung ergeben sich beim Kippen des Aufzeichnungsträgers verschiedene Bildeffekte. Beispielsweise ist bei einer Flachlage des Aufzeichnungsträgers nur eine neutrale Linienstruktur sichtbar und beim Kippen des Aufzeichnungsträgers kommt in Draufsicht eine Zeichnung bzw. ein Bild zum vorschein. Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung erläutert. Es zeigen:
- Fig. 1: schematisch eine räumliche Teilansicht eines erfindungsgemässen Aufzeichnungsträgers,
- Fig. 2: eine Draufsicht auf einen Abschnitt des Aufzeichnungsträgers und
- Fig. 3: schematisch den Aufbau eines Aufzeichnungsträgers nach einer Variante.

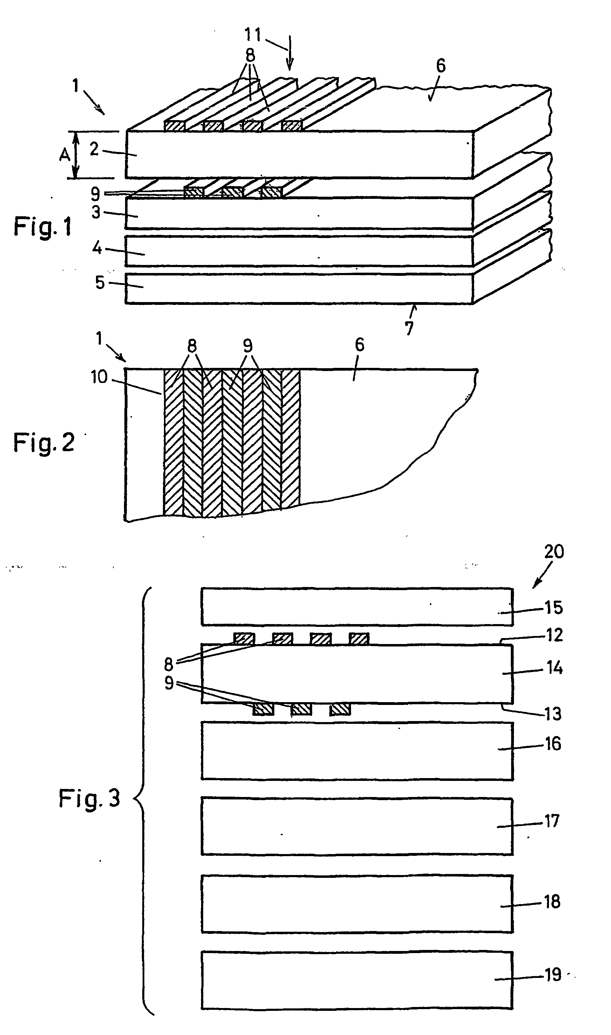

Der Aufzeichnungsträger 1 gemäss den Fig. 1 und 2 ist vorzugsweise eine mehrschichtige Kunststoffkarte, insbesondere eine Kredit- oder Ausweiskarte, beispielsweise eine staatliche Identitätskarte. Sie besteht aus mehreren miteinander verbundenen Schichten 2 - 5. eine oberste Schicht 2 besteht aus transparentem Kunststoff und bildet die Kartenoberseite 6. Eine unterste Schicht 5 ist ebenfalls transparent und bildet die Kartenrückseite 7. Diese Schicht 5 kann auch eine Lackschicht sein. Zwischen einer weiteren inneren transparenten Schicht 3 und der untersten Schicht 5 befindet sich eine opake und damit undurchsichtige Schicht 4.

Der Aufzeichnungsträger 1 weist gemäss Fig. 2 als Sicherheitselement ein Sicherheitsdruckbild 10 auf, das aus mehreren ersten Bildteilen 8 und mehreren zweiten Bildteilen 9 besteht. Diese Teile 8 und 9 sind gemäss Fig. 2 streifenförmig ausgebildet und alternierend angeordnet. Die ersten Teile 8 und die zweiten Teile 9 ergänzen sich exakt zum Sicherheitsdruckbild 10. Das hier vereinfacht dargestellte Sicherheitsdruckbild 10 ist vorzugsweise aus wesentlich mehr Teilen 8 und 9 dargestellt und diese Teile 8 und 9 sind wenigstens teilweise nicht gerade und bilden insgesamt eine Zeichnung oder ein Bild. Die Bildteile 8 und 9 können beispielsweise eine Figur, beispielsweise ein Wappen oder ein Tier darstellen.

Die ersten Bildteile 8 sind gemäss Fig. 1 auf die äusserste und erste Schicht 2 aufgedruckt. Die zweiten Bildteile 9 sind im Abstand zu den Bildteilen 8 auf die untere zweite Schicht 3 aufgedruckt. Wie ersichtlich, sind die zweiten Bildteile 9 in Draufsicht jeweils zwischen den ersten Bildteilen 8 angeordnet. In einer Draufsicht auf die Oberfläche 6 in Richtung des Pfeils 11 ergibt sich somit das in Fig. 2 gezeigte Sicherheitsdruckbild 10. Die ersten Bildteile 8 und die zweiten Bildteile 9 bilden somit jeweils ein Teilbild und beide Teilbilder ergänzen sich exakt zum Sicherheitsdruckbild 10. Wie erwähnt, müssen die ersten und zweiten Bildteile 8 und 9 nicht streifenförmig ausgebildet sein. Beispielsweise können diese Teile 8 und 9 auch kreisförmig ausgebildet sein. Die ersten und zweiten Bildteile 8 und 9 sind auf die Schicht 2 bzw. Schicht 3 in einem an sich bekannten Verfahren, beispielsweise durch Offsetdruck oder Siebdruck aufgebracht. Es sind aber auch noch andere Druckverfahren denkbar.

Wesentlich ist, dass zwischen den ersten Bildteilen 8 und den zweiten Bildteilen 9 ein Abstand A besteht. Dieser Abstand beträgt vorzugsweise mindestens 100 mµ. Vorzugsweise ist dieser Abstand A grösser als 150 mµ. Wird das Sicherheitsdruckbild 10 in Flachlage des Aufzeichnungsträgers 1 betrachtet, so ist im wesentlichen lediglich eine neutrale Struktur, beispielsweise eine neutrale Linienstruktur sichtbar. Durch Kippen der Karte ist dann hingegen eine Zeichnung oder ein Bild zu erkennen. Da sich die zweiten Bildteile 9 im Innern des Kartenkörpers befinden, ist das Sicherheitsdruckbild 10 sehr schwer zu fälschen. Insbesondere kann der Kippeffekt durch die bekannten Kopierverfahren nicht nachvollzogen werden.

Der in Fig. 3 gezeigte Aufzeichnungsträger 20 weist ebenfalls erste Bildteile 8 und zweite Bildteile 9 auf, die ein Sicherheitsdruckbild 10 bilden. Diese ersten und zweiten Bildteile 8 und 9 sind hier jedoch auf eine gemeinsame Schicht 14 aufgedruckt. Die Schicht 14 ist eine transparente Folie und die ersten Bildteile 8 sind auf eine obere Fläche 12 und die zweiten Bildteile 9 auf eine untere Fläche 13 aufgedruckt.

Auf die Schicht 14 ist eine weitere Schicht 15 aufgebracht, die eine transparente Folie oder eine Lackschicht ist. Diese Schicht 14 kann auch beim Aufzeichnungsträger 1 vorgesehen sein und schützt die ersten Bildteile 8.

Weitere Schichten werden durch eine transparente oder opake Folie 16, eine opake Folie 17, eine transparente oder opake Folie 18 sowie eine transparente Folie 19 gebildet. Die Schichten 15 bis 19 sind fest miteinander verbunden.

Die Erfindung wird durch die folgenden Ansprüche definiert.

## Patentansprüche

1. Mehrschichtiger Aufzeichnungsträger mit wenigstens einem in einem Druckverfahren hergestellten Sicherheitsdruckbild (10), das visuell sichtbar auf dem Aufzeichnungsträger aufgebracht ist, wobei erste Bildteile (8) und zweite Bildteile (9) des Sicherheitsdruckbildes (10) auf unterschiedliche und übereinander angeordnete Schichten (2, 3) oder auf unterschiedliche Seiten (12, 13) der gleichen Schicht (14) aufgebracht sind, wobei zwischen der Ebene der ersten Bildteile (8) und der Ebene der zweiten Bildteile (9) ein Abstand (A) besteht, **dadurch gekennzeichnet, dass** beide Bildteile (8, 9) im Druckverfahren hergestellt sind und sich die beiden Bildteile (8, 9) zu einem Gesamtbild ergänzen und so angeordnet sind, dass sich beim Betrachten des Gesamtbildes ein Kippeffekt ergibt, bei dem in einer Flachlage des Aufzeichnungsträgers eine neutrale Linienstruktur und in Draufsicht das Gesamtbild zum Vorschein kommt, wobei wenigstens die ersten Bildteile (8) auf eine transparente Schicht (2, 14) aufgedruckt sind, wenigstens die zweiten Bildteile (9) im Innern des Aufzeichnungsträgers gedruckt sind.

2. Aufzeichnungsträger nach Anspruch 1, **dadurch gekennzeichnet, dass** eine obere erste Schicht (2), auf welcher die ersten Bildteile (8) des Sicherheitsdruckbildes (10) aufgedruckt sind, eine Schichtdicke (A) von wenigstens 100 µm aufweist.

3. Aufzeichnungsträger nach Anspruch 2, **dadurch gekennzeichnet, dass** die Schichtdicke (A) wenigstens 150 µm beträgt.

4. Aufzeichnungsträger nach einem der Ansprüche 1 bis 3, **dadurch gekennzeichnet, dass** die ersten Bildteile (8) des Sicherheitsdruckbildes (10) auf die Kartenoberfläche (6) aufgedruckt und von einer Schutzfolie oder Lackschicht (15) überdeckt sind.

5. Aufzeichnungsträger nach Anspruch 1, **dadurch gekennzeichnet, dass** die ersten Bildteile (8) auf eine transparente erste Folienschicht (2) aufgedruckt sind, und dass die zweiten Bildteile (9) auf eine zweite transparente Folienschicht (3) aufgedruckt sind, und dass diese zweite Folienschicht (3) unterhalb der genannten ersten Folienschicht (2) angeordnet ist.

6. Aufzeichnungsträger nach einem der Ansprüche 1 bis 5, **dadurch gekennzeichnet, dass** wenigstens eine opake Schicht (4) zwischen transparente Schichten (3, 4) angeordnet ist.

7. Aufzeichnungsträger nach einem der Ansprüche 1 bis 6, **dadurch gekennzeichnet, dass** die genannten ersten und zweiten Bildteile (8, 9) wenigstens vergleichsweise streifenförmig ausgebildet und in der Draufsicht (11) alternierend angeordnet sind.

8. Aufzeichnungsträger nach Anspruch 1, **dadurch gekennzeichnet, dass** er eine Ausweiskarte oder Kreditkarte ist.

9. Aufzeichnungsträger nach Anspruch 1, **dadurch gekennzeichnet, dass** das Sicherheitsdruckbild (10) im Offsetdruck oder Siebdruck hergestellt ist.

## Claims

1. A multi-layer recording medium having at least one printed security image (10) which is produced in a printing process and is applied to the recording medium so that it is visible thereon, first image parts (8) and second image parts (9) of the printed security image (10) being applied to different, superimposed layers (2, 3) or being applied to different sides (12, 13) of the same layer (14), there being a spacing (A) between the plane of the first image parts (8) and the plane of the second image parts (9), **characterised in that** both image parts (8, 9) are produced in the printing process and the two image parts (8, 9) combine to form an overall image and are arranged such that, on viewing the overall image, a tilting effect is produced in which a neutral linear structure appears in a flat position of the recording medium and the overall image appears when seen in plan view, at least the first image parts (8) being printed onto a transparent layer (2, 14) and at least the second image parts (9) being printed within the recording medium.

2. A recording medium according to Claim 1, **characterised in that** an upper first layer (2) on which the first image parts (8) of the printed security image (10) are printed has a layer thickness (A) of at least 100 µm.

3. A recording medium according to Claim 2, **characterised in that** the layer thickness (A) is at least 150 µm.

4. A recording medium according to one of Claims 1 to 3, **characterised in that** the first image parts (8) of the printed security image (10) are printed onto the card surface (6) and are covered by a protective film or lacquer layer (15).

5. A recording medium according to Claim 1, **characterised in that** the first image parts (8) are printed onto a transparent first film layer (2), and **in that** the second image parts (9) are printed onto a second transparent film layer (3), and **in that** this second film layer (3) is arranged below the said first film layer (2).

6. A recording medium according to one of Claims 1 to 5, **characterised in that** at least one opaque layer (4) is arranged between the transparent layers (3, 4).

7. A recording medium according to one of Claims 1 to 6, **characterised in that** the said first and second image parts (8, 9) have an at least comparatively strip-shaped configuration and are arranged alternately as seen in plan view (11).

8. A recording medium according to Claim 1, **characterised in that** it is an identity card or credit card.

9. A recording medium according to Claim 1, **characterised in that** the printed security image (10) is produced by offset printing or screen printing.

## Revendications

1. Support d'enregistrement à plusieurs couches comportant au moins une image imprimée de sécurité (10) réalisée au moyen d'un procédé d'impression et qui est appliqué pour être observé visuellement sur le support d'enregistrement, et dans lequel des premières parties (8) et des secondes parties (9) de l'image imprimée de sécurité (10) sont déposées sur différentes couches superposées (2, 3) ou sur des faces différentes (12, 13) de la même couche (14), le plan des premières parties (8) de l'image et le plan des secondes parties (9) de l'image étant séparés par une distance (A), **caractérisé en ce que** les deux parties (8, 9) de l'image sont réalisées selon le procédé d'impression, et les deux parties (8, 9) de l'image se complètent pour former une image complète et sont disposées de telle sorte que lorsqu'on regarde l'image complète, on obtient un effet de basculement, selon lequel une structure de ligne neutre apparaît dans une position à plat du support d'enregistrement et l'ensemble de l'image apparaît selon une vue en plan, au moins les premières parties (8) de l'image étant imprimées sur une couche transparente (2, 14), et au moins les secondes parties (9) de l'image étant imprimées à l'intérieur du support d'enregistrement.

2. Support d'enregistrement selon la revendication 1, **caractérisé en ce qu'**une première couche supérieure (2), sur laquelle sont appliquées les premières parties (8) de l'image imprimée de sécurité (10), possède une épaisseur de couche (A) d'au moins 100 µm.

3. Support d'enregistrement selon la revendication 2, **caractérisé en ce que** l'épaisseur de couche (A) est égale à au moins 150 µm.

4. Support d'enregistrement selon l'une des revendications 1 à 3, **caractérisé en ce que** les premières parties (8) de l'image imprimée de sécurité (10) sont imprimées sur la surface (6) d'une carte et sont recouvertes par une feuille de protection ou une couche de vernis (15).

5. Support d'enregistrement selon la revendication 1, **caractérisé en ce que** les premières parties (8) de l'image sont imprimées sur une première couche en forme de feuille transparente (2) et que les secondes parties (9) de l'image sont imprimées sur une seconde couche en forme de feuille transparente (3) et que cette seconde couche en forme de feuille (3) est disposée au-dessous de la première couche en forme de feuille indiquée (2).

6. Support d'enregistrement selon l'une des revendications 1 à 5, **caractérisé en ce qu'**au moins une couche opaque (4) est disposée entre des couches transparentes (3, 4).

7. Support d'enregistrement selon l'une des revendications 1 à 6, **caractérisé en ce que** lesdites premières et secondes parties (8, 9) de l'image sont réalisées au moins comparativement en forme de bandes et sont disposées d'une manière alternée selon la vue en plan (11).

8. Support d'enregistrement selon la revendication 1, **caractérisé en ce qu'**il s'agit d'une carte d'identité ou d'une carte de crédit.

9. Support d'enregistrement selon la revendication 1, **caractérisé en ce que** l'image imprimée de sécurité (10) est réalisée par impression offset ou par sérigraphie.
